(19) Europäisches Patentamt
European Patent Office
Office européen des brevets

(11) **EP 4 113 667 A2**

(12) **EUROPEAN PATENT APPLICATION**

(43) Date of publication:
**04.01.2023 Bulletin 2023/01**

(21) Application number: **22182702.5**

(22) Date of filing: **01.07.2022**

(51) International Patent Classification (IPC):
**H01M 4/587** (2010.01)    **H01M 10/0525** (2010.01)
**H01M 4/02** (2006.01)

(52) Cooperative Patent Classification (CPC):
**H01M 4/587; H01M 10/0525;** H01M 2004/021;
H01M 2004/027

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.07.2021 KR 20210087015**

(71) Applicant: **SK On Co., Ltd.**
**Seoul 03188 (KR)**

(72) Inventors:
• **JEON, Chan Young**
 **34124 Daejeon (KR)**
• **KANG, Hee Gyoung**
 **34124 Daejeon (KR)**
• **PARK, So Hyun**
 **34124 Daejeon (KR)**
• **HWANG, Hae Suk**
 **34124 Daejeon (KR)**

(74) Representative: **Stolmár & Partner**
**Patentanwälte PartG mbB**
**Blumenstraße 17**
**80331 München (DE)**

(54) **NEGATIVE ELECTRODE FOR A LITHIUM SECONDARY BATTERY WITH IMPROVED RAPID CHARGING PERFORMANCE AND LITHIUM SECONDARY BATTERY COMPRISING THE SAME**

(57) The present invention relates to a negative electrode for a secondary battery and a secondary battery including the same. The negative electrode includes: a current collector; and a negative electrode active material layer formed on the current collector and containing a negative electrode active material, wherein the negative electrode satisfies the following Relational Expression 1:

[Relational Expression 1]

$$D < 1.9 \cdot 10^{-3}$$

wherein D is a coefficient of diffusion of lithium ions in the negative electrode and is derived from the following expression:

$$D = \sigma^2 \cdot \tau_d^{-\gamma}$$

wherein $\sigma$ is a thickness (cm) of the negative electrode active material layer, $\tau_d$ is a diffusion time (s), and $\gamma$ is a dispersion parameter and satisfies $0.8 \leq \gamma \leq 0.95$.

**EP 4 113 667 A2**

## Description

### TECHNICAL FIELD

The following disclosure relates to a negative electrode for a secondary battery having improved rapid charging performance and a secondary battery including the same.

### BACKGROUND

Recently, in accordance with an increase in demand for electronic devices such as mobile devices, the development of technologies for weight reduction and miniaturization of electrochemical batteries (secondary batteries) for increasing portability of the electronic devices has been expanded. In addition to such a trend, the development of high-capacity and high-output secondary batteries has been demanded.

Research on lithium secondary batteries has been conducted to increase a mixed density of a negative electrode so as to achieve a high capacity. When the mixed density of the negative electrode is increased, a content of a negative electrode active material in the same volume of the negative electrode may be increased, such that an energy density is increased. However, as the mixed density is increased, a porosity of the negative electrode is reduced, such that a diffusion rate of lithium ions is reduced, an intercalation/deintercalation reaction of lithium ions in the negative electrode is not smoothly carried out, and output performance is rather reduced. Such problems are particularly severe during a high-rate charging and discharging process, and thus, even when a content of the active material in the negative electrode is increased, a discharge capacity and cycle characteristics are significantly reduced during high-rate charging and discharging. Therefore, it is required to develop a negative electrode capable of implementing both a high mixed density and a high capacity.

The importance of a high-output electrode and pores developed in the electrode has been recognized, and accordingly, efforts for developing an electrode pore structure advantageous for exhibiting high performance have been made. In the related art, in order to implement a pore structure advantageous for exhibiting high performance, a pore volume, an average pore size, and the like have been applied. However, the above factors are analyzed by filling the electrode with nitrogen gas, mercury, or the like, which is different from the actual electrode-electrolyte system. Therefore, it is difficult to say that it represents the actual system in which the battery is operated.

In Korean Patent Laid-Open Publication No. 10-2019-0042335, a situation when lithium ions diffuse into active material particles is disclosed, and a coefficient of diffusion due to the active material is described, but development of pores in an electrode active material layer is not described.

### SUMMARY

Pores in a lithium secondary battery electrode play an important role in exhibiting cell performance. Since the pore is a path for supplying lithium ions in the electrode, it is important to consider how the pores are formed in the electrode. Examples of factors involved in pore formation include electrode components such as an active material, a conductive material, and a binder, and structural elements such as a loading amount and a density. Among these factors, excluding the structural factors, it may be appreciated that the active material has the greatest effect on the pore formation in the electrode (electrode active material layer) except for factors, which are contained in the electrode in small amounts, such as the conductive material and the binder.

Meanwhile, a supply of lithium ions in the pores of the electrode is based on a diffusion mechanism. In particular, the diffusion of the lithium ions occurring in the electrode is a limited restrict diffusion with spatial constraints. Therefore, a coefficient of diffusion (that is, a diffusion rate) and a diffusion time reflect a diffusion space (the longer the diffusion space, the longer the diffusion time). Accordingly, when the time for the lithium ions to diffuse in the pores of the electrode is grasped, pore formation may be interpreted.

In the present invention, an active material layer having an appropriate pore structure in an electrode is provided to improve the performance of the electrode. In particular, the electrode including the active material layer has a relatively long diffusion time. In general, it may be considered that the shorter the diffusion time, the better the diffusion structure. However, since the diffusion mechanism with spatial constraints occurs in the electrode, it may be interpreted in the opposite way. That is, it may be analyzed that the longer the diffusion time in the limited diffusion space, the narrower and longer the diffusion space (the length of the pore). The long diffusion space in the electrode means that pores are formed finely and uniformly in the electrode. Therefore, there is an advantage in that lithium ions may be uniformly supplied (diffused) to the entire space of the active material layer of the electrode.

An embodiment of the present invention is directed to providing a secondary battery having a pore structure advantageous for exhibiting high performance, and in particular, having high-rate charging and discharging performance by producing an active material and an electrode implementing the features described above.

In one general aspect, a negative electrode for a secondary battery includes: a current collector; and a negative electrode active material layer formed on the current collector and containing a negative electrode active material, wherein the negative electrode satisfies the following Relational Expression 1:

[Relational Expression 1]

$$D < 1.9 \cdot 10^{-3}$$

wherein D is a coefficient of diffusion of lithium ions in the negative electrode and is derived from the following expression:

$$D = \sigma^2 \cdot \tau_d^{-\gamma}$$

wherein $\sigma$ is a thickness (cm) of the negative electrode active material layer, $\tau_d$ is a diffusion time (s), and $\gamma$ is a dispersion parameter and satisfies $0.8 \leq \gamma \leq 0.95$.

The negative electrode may further satisfy the following Relational Expression 2,

[Relational Expression 2]

$$1 \cdot 10^{-3} \leq D < 1.9 \cdot 10^{-3}$$

wherein D is a coefficient of diffusion of lithium ions in the negative electrode and is derived from the following expression:

$$D = \sigma^2 \cdot \tau_d^{-\gamma}$$

wherein $\sigma$ is a thickness (cm) of the negative electrode active material layer, $\tau_d$ is a diffusion time (s), and $\gamma$ is a dispersion parameter and satisfies $0.8 \leq \gamma \leq 0.95$.

The negative electrode may have a diffusion time $\tau_d$ of the lithium ions of 0.020 seconds or longer.

The negative electrode may have a diffusion time $\tau_d$ of the lithium ions of 0.025 to 0.041 seconds.

The negative electrode active material may include at least one carbon-based active material.

The negative electrode active material layer may have a total pore volume of 0.20 to 0.23 $cm^3$/g.

The negative electrode active material layer may have a porosity of 20 to 30%.

The negative electrode active material layer may have an average pore size (D50) of 550 to 800 nm.

The negative electrode active material layer may have a loading amount of 6 to 15 $g/cm^2$.

The negative electrode active material layer may have a negative electrode density of 1.4 to 1.8 $g/cm^3$.

In another general aspect, a second battery includes: the negative electrode for a secondary battery; a positive electrode; a separator; and an electrolyte solution.

Other features and aspects will be apparent from the following detailed description, the drawings, and the claims.

## DETAILED DESCRIPTION OF EMBODIMENTS

The advantages and features of the present invention and methods accomplishing them will become apparent from exemplary embodiments described in detail with the accompanying drawings. However, the present invention is not limited to exemplary embodiments to be described below, but may be implemented in various different forms. These exemplary embodiments will be provided only in order to make the present invention complete and allow those skilled in the art to completely recognize the scope of the present invention, and the present invention will be defined by the scope of the claims. Specific contents for implementing the present invention will be described in detail with reference to the accompanying drawings. The same reference numerals refer to the same components regardless of the drawings. The term "and/or" includes any and all combinations of one or more of the listed items.

Unless defined otherwise, all terms (including technical and scientific terms) used in the present specification have the same meanings as commonly understood by those skilled in the art to which the present invention pertains. Throughout the present specification, unless explicitly described to the contrary, "comprising" any components will be understood to imply further inclusion of other components rather than the exclusion of any other components. In addition, the singular forms are intended to include the plural forms, unless the context clearly indicates otherwise.

In the present specification, it will be understood that when an element such as a layer, a film, a region, a plate, or the like, is referred to as being "on" or "above" another element, it may be directly on another element or may have an intervening element present therebetween.

An exemplary embodiment of the present invention provides a negative electrode for a secondary battery. The negative electrode includes: a current collector; and a negative electrode active material layer formed on the current collector and containing a negative electrode active material.

The current collector may be selected from the group consisting of a copper foil, a nickel foil, a stainless steel foil, a titanium foil, a nickel foam, a copper foam, a polymer substrate coated with a conductive metal, and a combination thereof, but the present invention is not limited thereto.

The negative electrode active material layer may contain a negative electrode active material and a binder, and may further contain a conductive material.

The negative electrode active material may include at least one carbon-based active material, and preferably may include at least two carbon-based active materials. For example, the negative electrode active material may be at least one carbon-based active material, and preferably may be at least two carbon-based active materials. Therefore, a coefficient of diffusion of lithium ions of the negative electrode of the present invention may be controlled.

The carbon-based active material may include one or more selected from the group consisting of natural graphite, artificial graphite, graphitized carbon fibers, graphitized mesocarbon microbeads, and amorphous carbon, and may be preferably artificial graphite. In addition, the carbon-based active material may contain primary particles, and preferably may contain secondary particles formed by aggregation of two or more types of primary particles. Therefore, the coefficient of diffusion of lithium ions of the negative electrode of the present invention may be controlled in a preferred range.

The carbon-based active material may have a coating layer formed on a surface of the particle and including amorphous carbon composed of soft carbon and/or hard carbon. Therefore, the coefficient of diffusion of lithium ions of the negative electrode of the present invention may be controlled in a preferred range.

As an example, a method of producing the artificial graphite is as follows, but the present invention is not limited thereto. In general, artificial graphite particles may be obtained by mixing a graphitizable raw material (aggregate), a graphitization catalyst, and a binder for binding the graphitizable raw material and the graphitization catalyst, and performing pre-calcination and graphitization. As the graphitizable aggregate, various types of coke such as gold coke and needle coke may be used. In addition, natural graphite or artificial graphite that has already been graphitized may also be used. As the binder, petroleum, coal, artificial pitch, and tar may be used, and a material for graphitization like the aggregate is preferred. As the graphitization catalyst, carbide, oxide, and nitride of silicon, iron, nickel, titanium, boron, and the like may be used. It may be preferable that the pre-calcination and graphitization are performed in an atmosphere in which the aggregate and the binder are difficult to oxidize, for example, in a nitrogen atmosphere, an argon atmosphere, vacuum, or the like. It may be preferable that the pre-calcination is performed in a temperature range of 400 to 1,000°C, and the graphitization is performed at a temperature of 2,000°C or higher. In the graphitization, as the graphitization catalyst is removed at a temperature of 2,000°C or higher, fine pores may be formed. In addition, it is more preferable that a graphitization temperature is 2,500°C or higher, and it is most preferable that the graphitization temperature is 2,800°C or higher because graphite having high crystallinity may be obtained. When the graphitization temperature is lower than 2,000°C, development of graphite crystals is deteriorated and the graphitization catalyst remains in the produced graphite particles, such that a charge and discharge capacity tends to be reduced. In addition, it is preferable that the graphitization catalyst is added in an amount of 1 to 50 wt% with respect to the total weight of the graphitizable aggregate or the graphite and the binder. When the amount of graphitization catalyst added is less than 1 wt%, development of crystals of the artificial graphite particles is deteriorated, and the charge and discharge capacity tends to be reduced. Meanwhile, when the amount of graphitization catalyst added exceeds 50 wt%, it is difficult to uniformly mix the materials, and workability tends to be deteriorated. Since the artificial graphite obtained as described above is in a block state, it is preferable to pulverize the obtained artificial graphite. A pulverization method is not particularly limited, and devices such as a jet mill, a vibration mill, and a hammer mill may be used. It is preferable that an average particle size (D50) of the particles after the pulverization is 100 μm or less. In addition, when the average particle size is in a range of 10 to 50 μm, coatability is excellent, which may be more preferred. In addition, the powder after the pulverization may be subjected to cold isostatic pressing, if necessary, but the present invention is not limited thereto.

The negative electrode active material may further include a metal-based active material. The metal-based active material refers to an active material containing a metal, and in general, refers to an active material containing elements into which lithium may be inserted and having a theoretical electric capacity per unit mass of 500 mAh/g or more when lithium is inserted. Examples of the metal-based active material include lithium metal, a single metal capable of forming a lithium alloy (for example, Ag, Al, Ba, Bi, Cu, Ga, Ge, In, Ni, P, Pb, Sb, Si, Sn, Sr, Zn, Ti, or the like), and an alloy thereof, and oxide, sulfide, nitride, silicide, carbide, and phosphide of the metal or alloy.

It is preferable that a silicon-based active material containing silicon is used as a metal-based negative electrode active material in terms of implementing a high capacity of the battery. Examples of the silicon-based active material include silicon (Si), an alloy of silicon and nickel, iron, aluminum, or the like, $SiO_x$ (0 < x < 2), a mixture of a Si-containing material and a carbon material, and a composite product of a Si-containing material and conductive carbon formed by coating or complexing a Si-containing material with conductive carbon.

The binder may be a water-soluble binder. Specifically, the binder may be styrene-butadiene rubber, acrylated styrene-butadiene rubber, polyvinyl alcohol, sodium polyacrylate, a copolymer of propylene and an olefin having 2 to 8 carbon atoms, polyacrylamide, a copolymer of (meth)acrylic acid and (meth)acrylic acid alkyl ester, or a combination thereof. When the water-soluble binder is used as a negative electrode binder, the water-soluble binder may bind the electrode active material to the current collector well without affecting a viscosity of a slurry, which is preferred. However, the electrode slurry may be easily gelled due to the electrode active material and the conductive material that are fine particles. Therefore, the negative electrode active material layer may further contain a thickener for making a stable slurry by imparting the viscosity to the electrode slurry. As an example, a cellulose-based compound, specifically, carboxymethyl cellulose, hydroxypropylmethyl cellulose, methyl cellulose, or a mixture of one or more salts of alkali metals thereof may be used as the thickener. In this case, Na, K, or Li may be used as the alkali metal.

The conductive material is used to impart conductivity to the negative electrode, and is not particularly limited as long as it is a conventional electronic conductive material that does not cause a chemical change in the battery. As an example, the conductive material may be natural graphite, artificial graphite, carbon black, acetylene black, Ketjen black, a carbon fiber, a carbon nanotube, and a combination thereof, but is not limited thereto.

The negative electrode may satisfy the following Relational Expression 1, and more preferably, may satisfy the following Relational Expression 2:

[Relational Expression 1]

$$D < 1.9 \cdot 10^{-3}$$

[Relational Expression 2]

$$1 \cdot 10^{-3} \leq D < 1.9 \cdot 10^{-3}$$

wherein D is a coefficient of diffusion of lithium ions in the negative electrode and may be derived from the following expression:

$$D = \sigma^2 \cdot \tau_d^{-\gamma}$$

wherein $\sigma$ is a thickness (cm) of the negative electrode active material layer, $\tau_d$ is a diffusion time constant (s), and $\gamma$ is a dispersion parameter and satisfies $0.8 \leq \gamma \leq 0.95$.

In the negative electrode according to an exemplary embodiment of the present invention, the coefficient of diffusion (D, $cm^2 \cdot s^{-\gamma}$) of Relational Expression 1 may represent a rate at which the lithium ions in the pores of the negative electrode are supplied based on a diffusion mechanism. The coefficient of diffusion is analyzed in a system (negative electrode/separator/negative electrode) in which charging and discharging are not performed. Since charging and discharging are not performed, the lithium ions do not react with the active material. The coefficient of diffusion may reflect only when the lithium ions diffuse through the electrolyte (liquid) in the pore structure of the negative electrode active material layer.

That is, the coefficient of diffusion of the present invention reflects a diffusion rate of the lithium ions immediately before the lithium ions are diffused in the pores through the electrolyte (liquid) and reach the active material. A pore structure in a negative electrode may be more accurately evaluated through the coefficient of diffusion in comparison to the related art in which diffusion of lithium ions is evaluated in a chargeable and dischargeable system (a battery including a positive electrode/separator/negative electrode and an electrolyte solution).

Specifically, the coefficient of diffusion (D) may be $1.1 * 10^{-3} \leq D < 1.9 * 10^{-3}$, $1.15 * 10^{-3} \leq D < 1.9 * 10^{-3}$, $1.2 * 10^{-3} \leq D < 1.9 * 10^{-3}$, or $1.5 * 10^{-3} \leq D < 1.9 * 10^{-3}$, and specifically, may be $1 * 10^{-3} \leq D \leq 1.85 * 10^{-3}$, $1 * 10^{-3} \leq D \leq 1.8 * 10^{-3}$, $1 * 10^{-3} \leq D \leq 1.5 * 10^{-3}$, $1 * 10^{-3} \leq D \leq 1.4 * 10^{-3}$, $1 * 10^{-3} \leq D \leq 1.3 * 10^{-3}$, or $1 * 10^{-3} \leq D \leq 1.2 * 10^{-3}$. In the negative electrode implemented so that it has the same loading amount of the negative electrode active material layer and the same negative electrode density (the same pore volume) as the coefficient of diffusion is reduced to the above range, it is analyzed that as the diffusion time of the lithium ions is increased, the diffusion space (the length of the pore) is narrow and long. Accordingly, the pores are finely and uniformly formed in the electrode, such that the lithium ions may be uniformly supplied to the entire electrode, thereby improving high-output characteristics of the battery. The coefficient of diffusion is a value calculated in consideration of the diffusion time and the diffusion space, and it may be appreciated that in the case of the negative electrode having an appropriate range of the coefficient of diffusion as described above, the diffusion time is in a preferred range, and the pores are properly formed. However, a case where the coefficient of diffusion is excessively reduced may mean that the pores are too finely developed. In this case, since a path for diffusion of ions may be excessively long, diffusion resistance may be increased and output characteristics may be deteriorated.

Various methods may be applied to produce the negative electrode active material layer having a coefficient of diffusion within the above range. For example, in a case where artificial graphite is used as an active material, a difference in physical properties such as hardness and strength of artificial graphite to be prepared may be implemented by changing the type of raw material, for example, coke. Therefore, pore characteristics of a negative electrode active material layer to be produced may be changed. For example, in a case of isotropic coke, a characteristic of relatively higher strength than that of needle coke may be considered. In addition, pore characteristics of a negative electrode active material layer to be produced may be changed by using a mixture of two or more types of active material particles having different average particle sizes (D50) or adjusting a mixing weight ratio of these active material particles. In addition, in a case where the surface of the active material includes a coating layer including amorphous carbon composed of soft carbon and/or hard carbon, the strength of the active material particle is increased, such that conditions advantageous for forming pores may be obtained. However, the present invention is not limited to the properties of the negative electrode active material and the method of producing the negative electrode active material.

The thickness ($\sigma$) of the negative electrode active material layer may refer to a thickness of the negative electrode active material layer measured after the produced negative electrode is immersed in an electrolyte solution and then stored at room temperature for 10 hours. As a thickness measurement method, the thickness of the negative electrode active material layer may be measured by subtracting a thickness of the foil from a thickness of the negative electrode using a thickness gauge, or a thickness of the negative electrode active material layer after peeling off the foil of the negative electrode may be measured, but the present invention is not limited thereto. In this case, as the electrolyte solution, for example, an electrolyte solution obtained by mixing a lithium salt (1.0 M $LiPF_6$) with an organic solvent (ethylene carbonate (EC):ethyl methyl carbonate (EMC) = 1:4 vol%) and mixing 1 vol% of an electrolyte solution additive (fluoroethylene carbonate (FEC)) may be used, but the present invention is not limited thereto. Meanwhile, in a case where the composition of the electrolyte solution is changed, although a movement speed of the ions may vary and the time for the ions to diffuse may vary due to the difference in electrolyte solution, it is analyzed that the tendency of the coefficient of diffusion (D) of the lithium ions shown in the present invention is not reversed or different results are not obtained. In this case, a degree of change in numerical range of the coefficient of diffusion (D) may be $\pm 0.1$ to 5%, which is the level of the error range.

The diffusion time constant ($\tau_d$) may be measured by Nyquist plotting and fitting data calculated using electrochemical impedance spectroscopy (EIS).

The EIS may be performed with Biologic VMP3 device, and in this case, a frequency range from 500 Khz to 50 mhz may be applied, but the present invention is not limited thereto. In the Nyquist plotting, a common method of graphing and viewing the EIS results may be applied, and in the fitting, a Z-fit tool in EC-Lab software may be used, but the present invention is not limited thereto.

The dispersion parameter ($\gamma$) refers to a value for correcting a difference between the experimental environment and the ideal environment of the analysis model ($\tau_d$), and is obtained by the fitting of the data. As the dispersion parameter ($\gamma$) is close to 1, it means an ideal condition, and on the contrary, as the dispersion parameter ($\gamma$) is close to 0, it means a non-ideal condition. In the case of the secondary battery system, it is limited only when the dispersion parameter has a value of 0.8 to 0.95. In the present invention, a value of 0.88 to 0.92 is applied as the dispersion parameter, but the present invention is not limited thereto.

The negative electrode according to an exemplary embodiment of the present invention may have a diffusion time ($\tau_d$) of the lithium ions of 0.020 seconds (s) or longer, and more preferably may have a diffusion time ($\tau_d$) of the

lithium ions of 0.025 to 0.050 seconds (s). When the lithium ions diffuse in the electrode, the diffusion time is proportional to the volume (space or area formed by each pore structure in which the lithium ions may diffuse) formed in each pore structure path. When the diffusion time of the lithium ions is in the above range, it may be inferred that the pores are finely and densely formed. In a case where a negative electrode having the diffusion time of the lithium ions within the above range is produced, the effects described above may be implemented. On the other hand, when the diffusion time exceeds the above range, it means that the pores are excessively finely developed. Problems of deterioration of long-term performance that may occur due to an excessive reaction surface area may occur, and the diffusion resistance may be excessively increased.

The negative electrode active material layer may have a total pore volume of 0.18 to 0.25 $cm^3/g$, and preferably may have a total pore volume of 0.20 to 0.25 $cm^3/g$ or 0.20 to 0.23 $cm^3/g$. Therefore, the effects described above may be further improved.

The negative electrode active material layer may have a porosity of 20 to 30%, and preferably may have a porosity of 20 to 25% or 21 to 25%. Therefore, the effects described above may be further improved.

The negative electrode active material layer may have an average pore size (D50) of 500 to 1,000 nm, preferably may have an average pore size (D50) of 500 to 850 nm, 550 to 800 nm, or 550 to 750 nm, and more preferably may have an average pore size (D50) of 550 to 700 nm. Therefore, the effects described above may be further improved.

The negative electrode active material layer may have a specific surface area of 2.0 to 6.0 $m^2/g$, and preferably may have a specific surface area of 2.1 to 6.0 $m^2/g$ or 3.0 to 6.0 $m^2/g$. Therefore, the effects described above may be further improved.

The negative electrode active material layer may have a loading amount of 5.0 to 25.0 $g/cm^2$ (based on a solid content in the negative electrode active material layer), and preferably may have a loading amount of 5.0 to 20.0 $g/cm^2$, 5.0 to 15.0 $g/cm^2$, or 6.0 to 15.0 $g/cm^2$. The negative electrode active material layer may have a thickness of 50 to 150 $\mu$m, and preferably may have a thickness of 50 to 120 $\mu$m or 70 to 120 $\mu$m. Therefore, the effects described above may be further improved.

The negative electrode active material layer may have a negative electrode density of 1.4 to 1.8 $g/cm^3$ and preferably 1.6 to 1.8 $g/cm^3$ or 1.4 to 1.7 $g/cm^3$. As an example, the negative electrode active material layer may have a negative electrode density of 1.7 $g/cm^3$. Therefore, the effects described above may be further improved.

The coefficient of diffusion (D) of the lithium ions of the present invention may not be easily inferred from individual factors such as the total pore volume, the porosity, the average pore size, the specific surface area, the loading amount, and the negative electrode density of the negative electrode active material layer described above. Similarly, as described above, the coefficient of diffusion may be different even when the standards of the active materials are the same. This is because the size, the shape (the spherical shape, the plate shape, the crushed shape, or the like), the density, the strength, and the properties of the raw material that comprehensively constitute the standard of the active material act in a complex manner to derive characteristics of the pores. Therefore, rather than defining the performance of the pores of the negative electrode active material layer with several factors of the active material, it is preferable to define the performance of the pores with the characteristics of the pores. In this case, it is more preferable to evaluate the characteristics of the pores by the coefficient of diffusion rather than the numerical range of each individual factor such as the total pore volume, the porosity, the average pore size, the specific surface area, the loading amount, or the negative electrode density of the negative electrode active material layer.

Meanwhile, the total pore volume, the porosity, the average pore size, and the specific surface area of the negative electrode active material layer may be measured by a porosimeter method, but the present invention is not limited thereto.

Another exemplary embodiment of the present invention provides a second battery including: the negative electrode; a positive electrode; a separator; and an electrolyte solution.

The negative electrode is the same as described above.

The positive electrode includes a current collector and a positive electrode active material layer formed by applying a positive electrode slurry containing a positive electrode active material to the current collector.

The negative electrode current collector may be used as the current collector, and any material known in the art may be used. However, the present invention is not limited thereto.

The positive electrode active material layer may contain a positive electrode active material, and may further contain a binder and a conductive material, if necessary (optionally). A positive electrode active material known in the art may be used as the positive electrode active material. It is preferable that a composite oxide of lithium and a metal selected from cobalt, manganese, nickel, and a combination thereof is used as the positive electrode active material. However, the present invention is not limited thereto.

The negative electrode binder and the negative electrode conductive material described above may be used as the binder and the conductive material, and any material known in the art may be used. However, the present invention is not limited thereto.

The separator may be selected from a glass fiber, polyester, polyethylene, polypropylene, polytetrafluoroethylene, or a combination thereof, and may be in a form of a nonwoven fabric or a woven fabric. In a lithium secondary battery, for example, a separator formed of a polyolefin-based polymer such as polyethylene or polypropylene may be mainly used, a separator coated with a composition containing a ceramic component or a polymer material may be used to secure heat resistance and mechanical strength, a separator having a single layer or multilayer structure may be selectively used, or a separator known in the art may be used. However, the present invention is not limited thereto.

The electrolyte solution contains an organic solvent and a lithium salt.

The organic solvent functions as a medium through which ions involved in an electrochemical reaction of the battery may move. For example, a carbonate-based solvent, an ester-based solvent, an ether-based solvent, a ketone-based solvent, an alcohol-based solvent, or an aprotic solvent may be used. These organic solvents may be used alone or as a mixture of two or more thereof. When a mixture of two or more organic solvents is used, a mixing ratio may be appropriately adjusted according to a desired battery performance. Meanwhile, an organic solvent known in the art may be used, but the present invention is not limited thereto.

The lithium salt is a material that is dissolved in the organic solvent to act as a supply source of the lithium ions in the battery, enables a basic operation of the lithium secondary battery, and serves to promote movement of the lithium ions between the positive electrode and the negative electrode. Examples of the lithium salt include $LiPF_6$, $LiBF_4$, $LiSbF_6$, $LiAsF_6$, $LiN (SO_3C_2F_5)_2$, $LiN (CF_3SO_2)_2$, $LiC_4F_9SO_3$, $LiClO_4$, $LiAlO_2$, $LiAlCl_4$, $LiN (C_xF_{2x+1}SO_2) (C_yF_{2y+1}SO_2)$ (x and y are natural numbers), $LiCl$, $LiI$, $LiB(C_2O_4)_2$, and a combination thereof. However, the present invention is not limited thereto.

A concentration of the lithium salt may be in a range of 0.1 M to 2.0 M. When the concentration of the lithium salt is in the above range, the electrolyte solution has appropriate conductivity and viscosity, and thus, an excellent performance of the electrolyte solution may be exhibited and the lithium ions may effectively move.

In addition, in order to improve charging and discharging characteristics, flame retardancy properties, and the like, the electrolyte solution may further contain pyridine, triethyl phosphate, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like, if necessary. In some cases, in order to impart noninflammability, the electrolyte solution may further contain a halogen-containing solvent such as carbon tetrachloride or trifluoroethylene, and in order to improve high-temperature storage characteristics, the electrolyte solution may further contain fluoro-ethylene carbonate (FEC), propene sulfone (PRS), fluoro-propylene carbonate (FPC), and the like.

The secondary battery may be a lithium secondary battery.

In a method of manufacturing a secondary battery according to the present invention in order to achieve the objects as described above, a battery may be manufactured by sequentially stacking the produced negative electrode, separator, and positive electrode to form an electrode assembly, putting the formed electrode assembly into a cylindrical battery case or a prismatic battery case, and then injecting an electrolyte solution. Alternatively, a battery may be manufactured by stacking the electrode assembly, impregnating the electrode assembly with an electrolyte solution, putting the resultant into a battery case, and sealing the battery case.

As the battery case used in the present invention, a battery case commonly used in the art may be adopted. An external shape according to the use of the battery is not limited, for example, a cylindrical, prismatic, pouch, or coin type case using a can may be used.

The secondary battery according to the present invention may be used in a battery cell that is used as a power source in a small device, and may be preferably used as a unit cell of a medium and large battery module including a plurality of battery cells. Preferred examples of a medium and large device include, but are not limited to, an electric vehicle, a hybrid electric vehicle, a plug-in hybrid electric vehicle, and a system for storing power.

Hereinafter, the present invention will be described in detail with reference to Examples. However, these Examples are intended to describe the present invention in more detail, and the scope of the present invention is not limited by the following Examples.

**Examples**

(Example 1)

Water was added to 97.3 wt% of a negative electrode active material, 1.5 wt% of an SBR binder, and 1.2% of CMC, and mixing was performed at room temperature for 120 minutes, thereby producing a slurry.

In this case, the negative electrode active material was artificial graphite obtained using petroleum-based needle coke, and a central particle size D50 thereof was 14 um. Artificial graphite was particles formed by aggregation of particles having a small size, a surface of each particle was coated with amorphous carbon (pitch), and the amount of coated amorphous carbon was about 3 wt%.

The prepared slurry was applied to a Cu foil current collector in a loading amount of 13 mg/cm², drying was performed, and then, rolling was performed so that a mixed density of the negative electrode (negative electrode density) was 1.7 g/cc, thereby producing a negative electrode.

(Example 2)

A negative electrode was produced in the same manner as that of Example 1, except that an artificial graphite negative electrode active material obtained using petroleum-based isotropic coke (the raw material coke was changed) was used. At this time, the central particle size D50 and the surface amorphous carbon coating of the artificial graphite were the same as those in Example 1.

(Example 3)

A negative electrode was produced in the same manner as that of Example 1, except that a negative electrode active material obtained by mixing the artificial graphite (D50 14 um) used in Example 1 and artificial graphite (D50 11 um) at a weight ratio of 3:7 was used. At this time, the artificial graphite (D50 11 um) was particles formed by aggregation of particles having a small size, a surface of each particle was coated with amorphous carbon (pitch), and the amount of coated amorphous carbon was about 3 wt%.

(Comparative Example 1)

A negative electrode was produced in the same manner as that of Example 3, except that a negative electrode active material obtained by mixing artificial graphite (D50 14 um) as the artificial graphite active material used in Example 3 and artificial graphite (D50 11 um) at a weight ratio of 7:3 was used.

(Comparative Example 2)

A negative electrode was produced in the same manner as that of Example 3, except that as the artificial graphite used in Example 3, both types of artificial graphite having a surface on which an amorphous carbon layer was not formed were used as negative electrode active materials.

(Comparative Example 3)

A negative electrode was produced in the same manner as that of Example 1, except that as the artificial graphite used in Example 1, artificial graphite having a surface on which an amorphous carbon layer was not formed was used as a negative electrode active material.

(Comparative Example 4)

A negative electrode was produced in the same manner as that of Example 3, except that artificial graphite having a central particle size D50 of 11 um was used as a single negative electrode active material.

**Evaluation Examples**

(Evaluation methods)

1. Measurement of physical properties of negative electrode

Information on a pore dimension in the negative electrode, a pore volume (mL/g) in the electrode, a specific surface area ($m^2$/g), and an average pore size (nm) of each of the negative electrodes produced in Examples 1 to 3 and Comparative Examples 1 to 4 were obtained using a mercury porosimeter (trade name: Auto pore V9620). The results thereof are shown in Table 1.

2. Measurement of coefficient of diffusion (D) of negative electrode

A coin-type symmetric cell was manufactured using each of the negative electrodes produced in Examples 1 to 3 and Comparative Examples 1 to 4, and the cell was filled with an electrolyte solution. At this time, a mixture obtained by mixing a lithium salt (1.0 M $LiPF_6$) with an organic solvent (EC:EMC = 1:4 vol%) and mixing an electrolyte solution additive FEC (1 vol%) was used as the electrolyte solution.

i) Data on the manufactured symmetric cell was measured using an electrochemical impedance spectroscopy (EIS) analyzer (trade name: Biologic VMP3), and at this time, a frequency range from 500 Khz to 50 mhz was applied.

A diffusion time constant ($\tau_d$) was obtained by Nyquist plotting and fitting the calculated data.

ii) In the Nyquist plotting, a common method of graphing and viewing the EIS results was applied.

iii) In the fitting, a Z-fit tool in EC-Lab software was used (results within the range of 500 kHz to 100 mHz in the Nyquist plot were usually targeted). A result value was simulated by applying the data of the corresponding region to an equivalent circuit in which resistance-limited diffusions were connected in series. As a result obtained by the simulation, an $x^2/$ |Z| value was $1 \cdot 10^{-2}$ or less, from which it could be determined that the reliability of the result was high.

After the filling of the electrolyte solution, Relational Expression 1 calculated by applying the thickness ($\sigma$) of 80 $\mu$m, the dispersion parameter ($\gamma$) of 0.91, and the obtained diffusion time constant ($\tau_d$) of the negative electrode active material layer is shown in Table 1.

3. Evaluation of high-rate charging characteristics of half cell

A PE separator was interposed between each of the negative electrodes produced in Examples 1 to 3 and Comparative Examples 1 to 4, a lithium metal positive electrode, a negative electrode, and a positive electrode, and an electrolyte solution was injected, thereby manufacturing a CR2016 coin cell. The assembled coin cell was rested at room temperature for 24 hours to manufacture a half cell. At this time, a mixture obtained by mixing a lithium salt (1.0 M LiPF$_6$) with an organic solvent (EC:EMC = 1:4 vol%) and mixing an electrolyte solution additive FEC (1 vol%) was used as the electrolyte solution.

High-rate charging performance of each of the manufactured half cells was evaluated by charging and discharging the half cell at a low controlled rate (0.1 C) during initial 3 to 5 cycles to stabilize the electrode, and then charging the half cell at a high rate (2 C). The results are shown in Table 1. At this time, the high charge rate (%) was calculated by measuring a high-rate (2 C) charging amount to a low-rate (0.1 C) charging amount.

(Evaluation results)

The negative electrode physical property evaluation, the coefficient of diffusion, and the half cell high charge rate of the negative electrode produced in Examples 1 to 3 and Comparative Examples 4 and the half cells are shown in Table 1.

[Table 1]

| | Example 1 | Example 2 | Example 3 | Comparative Example 1 | Comparative Example 2 | Comparative Example 3 | Comparative Example 4 |
|---|---|---|---|---|---|---|---|
| Pore volume (mL/g) | 0.21 | 0.21 | 0.21 | 0.22 | 0.21 | 0.22 | 0.22 |
| Specific surface area ($m^2/g$) | 4.42 | 3.16 | 5.62 | 4.29 | 4.24 | 3.68 | 2.10 |
| Average pore size (D50) (nm) | 646 | 653 | 586 | 767 | 766 | 758 | 852 |
| Diffusion time ($\tau_d$) (s) | 0.041 | 0.038 | 0.025 | 0.024 | 0.022 | 0.019 | 0.013 |
| Coefficient of diffusion (D, $cm^2/s$) ($1 * 10^{-3}$) | 1.17 | 1.26 | 1.83 | 1.91 | 2.06 | 2.36 | 3.33 |
| High charge rate (%) | 92 | 91 | 90 | 88 | 85 | 78 | 79 |

In the electrodes of Examples 1 to 3 and Comparative Examples 1 to 4 in which the same loading amount and the same negative electrode density of the negative electrode active material layers were implemented, the same pore volume in the negative electrode active material layer was confirmed. Since the electrodes produced in Examples satisfied Relational Expression 1 of the present invention, it was analyzed that the rapid charging performance (high charge rate) was improved in the electrodes produced in Examples in comparison to the electrodes produced in Comparative Examples 1 to 4. On the other hand, in Comparative Examples 1 to 4 in which the pores having the same average pore size and pore volume were formed, the pores were non-uniformly formed, and thus, the negative electrodes did not satisfy Relational Expression 1 of the present invention. Therefore, it was analyzed that the high charge rate was deteriorated.

In addition, in the case where the pore average particle size was out of the preferred range (Comparative Example 4), the pores were thick and locally developed, such that the ion diffusion length in the pore was shortened and the coefficient of diffusion was excessively increased. As a result, it was analyzed that the high charge rate was further deteriorated.

On the other hand, since the coefficient of diffusion of Example 1 was in a preferred range, it could be confirmed that a more improved performance was exhibited in Example 1 than those in Examples 2 and 3.

As set forth above, when the numerical range of the coefficient of diffusion of the lithium ions of the electrode suggested by the present invention is satisfied, the pores are finely and densely formed in the electrode, such that the diffusion resistance in the electrode is reduced. As a result, a battery having high-output performance may be provided.

Although the preferred exemplary embodiments of the present invention have been described above, the present invention is not limited to the exemplary embodiments, but may be manufactured in various different forms, and it will be apparent to those skilled in the art to which the present invention pertains that various modifications and alterations may be made without departing from the technical spirit or essential feature of the present invention. Therefore, it is to be understood that the exemplary embodiments described hereinabove are illustrative rather than being restrictive in all aspects.

**Claims**

1. A negative electrode for a secondary battery, comprising:

    a current collector; and
    a negative electrode active material layer formed on the current collector and containing a negative electrode active material,
    wherein the negative electrode satisfies the following Relational Expression 1:

    [Relational Expression 1]

    $$D < 1.9 \cdot 10^{-3}$$

    wherein D is a coefficient of diffusion of lithium ions in the negative electrode and is derived from the following expression:

    $$D = \sigma^2 \cdot \tau_d^{-\gamma}$$

    wherein $\sigma$ is a thickness (cm) of the negative electrode active material layer, $\tau_d$ is a diffusion time (s), and $\gamma$ is a dispersion parameter and satisfies $0.8 \leq \gamma \leq 0.95$.

2. The negative electrode of claim 1, wherein the negative electrode further satisfies the following Relational Expression 2,

[Relational Expression 2]

$$1 \cdot 10^{-3} \leq D < 1.9 \cdot 10^{-3}$$

wherein D is a coefficient of diffusion of lithium ions in the negative electrode and is derived from the following expression:

$$D = \sigma^2 \cdot \tau_d^{-\gamma}$$

wherein $\sigma$ is a thickness (cm) of the negative electrode active material layer, $\tau_d$ is a diffusion time (s), and $\gamma$ is a dispersion parameter and satisfies $0.8 \leq \gamma \leq 0.95$.

3. The negative electrode of claim 1, wherein the negative electrode has a diffusion time $\tau_d$ of the lithium ions of 0.020 seconds or longer.

4. The negative electrode of claim 1, wherein the negative electrode has a diffusion time $\tau_d$ of the lithium ions of 0.025 to 0.041 seconds.

5. The negative electrode of claim 1, wherein the negative electrode active material includes at least one carbon-based active material.

6. The negative electrode of claim 1, wherein the negative electrode active material layer has a total pore volume of 0.20 to 0.23 cm$^3$/g.

7. The negative electrode of claim 1, wherein the negative electrode active material layer has a porosity of 20 to 30%.

8. The negative electrode of claim 1, wherein the negative electrode active material layer has an average pore size (D50) of 550 to 800 nm.

9. The negative electrode of claim 1, wherein the negative electrode active material layer has a loading amount of 6 to 15 g/cm$^2$.

10. The negative electrode of claim 1, wherein the negative electrode active material layer has a negative electrode density of 1.4 to 1.8 g/cm$^3$.

11. A second battery comprising the negative electrode for a secondary battery of any one of claims 1 to 10; a a positive electrode; a separator; and an electrolyte solution.

**EP 4 113 667 A2**

**REFERENCES CITED IN THE DESCRIPTION**

**Patent documents cited in the description**

• KR 1020190042335